# FASCICULE DE BREVET EUROPEEN

(11) **EP 4 452 028 B1**
(45) Date de publication et mention de la délivrance du brevet: **27.08.2025**
(21) Numéro de dépôt: 22823130.4
(22) Date de dépôt: 19.12.2022
(51) Int. Cl.: A47J 43/046, A47J 43/06, A47J 43/07

(54) **DISPOSITIF D'OBTURATION D'UNE OUVERTURE SUR UN FOND DE RÉCIPIENT D'APPAREIL ÉLECTROMÉNAGER DE PRÉPARATION CULINAIRE**
VORRICHTUNG ZUM VERSCHLIESSEN EINER ÖFFNUNG AM BODEN EINES BEHÄLTERS EINES HAUSHALTSGERÄTS ZUR KULINARISCHEN ZUBEREITUNG
DEVICE FOR CLOSING AN OPENING ON THE BOTTOM OF A CONTAINER OF A HOUSEHOLD APPLIANCE FOR CULINARY PREPARATION

(30) Priorité: 21.12.2021 FR 2114192
(43) Date de publication de la demande: 30.10.2024
(73) Titulaire: SEB S.A., 69130 Ecully (FR)
(72) Inventeur: MORICE, Katell, 69134 Ecully Cedex (FR); GERARD, Emmanuel, 69134 Ecully Cedex (FR); FÉRON, Stéphanie, 69134 Ecully Cedex (FR)
(74) Mandataire: SEB Développement
(86) Numéro de dépôt international: PCT/EP2022/086804
(87) Numéro de publication internationale: WO 2023/118010

(56) Documents cités:
- WO-A1-2019/228181
- CN-A- 113 116 183
- CN-U- 204 600 260
- GB-A- 2 586 644

## Description

### Domaine technique

La présente invention concerne le domaine des appareils électroménagers de préparation culinaire et porte plus précisément sur un dispositif d'obturation d'une ouverture sur un fond de récipient d'appareil électroménager de préparation culinaire. L'invention concerne également un récipient d'appareil électroménager de préparation culinaire équipé d'un tel dispositif d'obturation, ainsi qu'un appareil électroménager de préparation culinaire équipé d'un tel récipient.

L'invention a pour objectif principal d'optimiser la conception du dispositif d'obturation.

### Etat de la technique

Les appareils électroménagers de préparation culinaire sont d'un usage fréquent aujourd'hui, certains d'entre eux étant capables de gérer la préparation culinaire du début à la fin de cuisson. Cela permet aux foyers de continuer à consommer des préparations culinaires fraichement préparées plutôt que de consommer des plats surgelés, tout en gérant en parallèle d'autres tâches familiales ou professionnelles.

Les préparations culinaires étant nombreuses et variées, le développement d'appareils électroménagers de préparation culinaire pouvant être utilisés pour de multiples préparations culinaires s'avère avantageux afin de limiter le nombre d'appareils électroménagers au sein du foyer.

Il est connu divers appareils électroménagers de préparation culinaire qui comprennent un récipient comportant un fond muni d'une ouverture et une broche rotative de réception d'au moins un outil de traitement culinaire. Cette broche rotative est montée sur le fond et permet également l'obturation de l'ouverture sur le fond. Le récipient est monté de manière amovible sur une base de l'appareil, cette base comprenant un arbre motorisé configuré pour s'accoupler avec la broche rotative lors de l'engagement du récipient sur la base. La broche rotative est maintenue assemblée avec le fond du récipient au moyen d'un organe de verrouillage de type quart de tour ou baïonnette. Le modèle d'utilité chinois CN204600260U présente une telle conception.

Ce document décrit un dispositif d'obturation d'une ouverture sur un fond de récipient d'appareil électroménager de préparation culinaire. Ce dispositif d'obturation comprend un bouchon traversant une ouverture du fond du récipient, une bague de verrouillage, un anneau ressort et une douille de serrage. La douille de serrage comporte des pattes élastiques prévues pour venir en prise avec la bague de verrouillage en enserrant l'anneau ressort.

Toutefois la bague de verrouillage n'est pas munie d'un épaulement interne, et le corps du bouchon ne comprend pas de patte flexible s'étendant longitudinalement, qui comporterait une face extérieure munie d'un ergot.

Il est également connu de pouvoir remplacer cette broche rotative de réception d'au moins un outil de traitement culinaire par un bouchon d'obturation de l'ouverture sur le fond du récipient. Cela permet de réaliser des recettes mijotées ou des recettes rissolées, qui ne nécessitent pas l'usage d'un outil de traitement culinaire. La demande internationale de brevet WO2017144907A1 décrit de telles caractéristiques. Selon WO2017144907A1, la fixation de la broche rotative de réception d'au moins un outil de traitement culinaire ou, en remplacement, du bouchon avec le fond du récipient est obtenue grâce à un organe de verrouillage de type quart de tour ou baïonnette. Le bouchon comprend un corps et une tête, le corps comprenant des ergots complémentaires à l'organe de verrouillage et permettant ledit verrouillage de type quart de tour ou baïonnette.

La fixation de la broche rotative ou du bouchon au moyen de l'organe de verrouillage de type quart de tour ou baïonnette est robuste. Cela s'avère nécessaire afin de maintenir fermement la broche rotative durant son entrainement en rotation par l'arbre motorisé de la base durant un traitement culinaire au moyen d'un outil de traitement culinaire. Cette robustesse de la fixation peut s'avérer contraignante au moment du retrait de la broche rotative ou du bouchon après usage, pour le nettoyage du récipient. En effet, le maintien convenable avec la main de la broche rotative ou du bouchon durant le retrait de l'organe de verrouillage n'est pas toujours aisé.

### Résumé de l'invention

La présente invention pallie cet inconvénient lors de l'usage du bouchon sur le récipient, pour la réalisation de préparations culinaires mijotées ou rissolées, c'est-à-dire réalisant uniquement un traitement thermique. En effet, durant l'usage, le bouchon a pour unique fonction d'obturer l'ouverture du fond de récipient ; celui-ci n'est pas sollicité en rotation comme peut l'être une broche rotative, ce qui permet avantageusement la mise en œuvre d'un système de verrouillage facilitant le retrait du bouchon au moment du nettoyage du récipient.

A cet effet, l'invention concerne un dispositif d'obturation d'une ouverture sur un fond de récipient d'appareil électroménager de préparation culinaire selon la revendication 1.

Ainsi, lors de la mise en place du dispositif d'obturation sur le récipient, l'utilisateur saisit le bouchon d'une main et insère le corps dans l'ouverture sur le fond du côté intérieur du récipient jusqu'à ce que la tête du bouchon vienne en appui sur la face interne du fond. Puis l'utilisateur place la bague de verrouillage du côté extérieur du fond et l'engage autour du corps en l'enfonçant simplement, ce qui fait fléchir l'au moins une patte flexible jusqu'à ce que l'ergot sur ladite patte flexible atteigne l'épaulement interne où ladite au moins une patte flexible peut ensuite revenir dans sa position normale sous l'effet de sa flexibilité, position normale dans laquelle l'ergot est placé sous l'épaulement interne et bloque le dégagement de la bague de verrouillage. Dans cette position, le fond est pincé entre la tête et la bague de verrouillage, un joint d'étanchéité étant placé entre ledit fond et ladite tête. Lors du retrait du dispositif d'obturation, l'utilisateur saisit la portion d'extrémité de l'au moins une patte flexible et la fait fléchir, ce qui dégage l'ergot de l'épaulement interne et autorise le dégagement de la bague de verrouillage vis-à-vis du corps, pour extraire ensuite le bouchon du fond du récipient.

Selon une réalisation préférentielle du dispositif d'obturation, le corps comprend deux pattes flexibles diamétralement opposées, les ergots sur ces deux pattes flexibles étant disposés en opposition pour venir s'encliqueter sur l'épaulement interne lors de la mise en place de la bague de verrouillage autour du corps. Cela facilite la manipulation des deux pattes flexibles avec le pouce et l'index d'une main, afin de les fléchir et de dégager ainsi les ergots de l'épaulement interne de la bague de verrouillage. Cela assure également une meilleure répartition des efforts durant l'assemblage du dispositif d'obturation avec le fond du récipient.

Selon une réalisation du dispositif d'obturation, le joint d'étanchéité est amovible du bouchon et agencé pour être placé autour du corps sous la tête de sorte à être pincé entre la face interne du fond et la tête une fois le bouchon et la bague de verrouillage mis en place sur le fond. En variante, le joint d'étanchéité pourrait être assujetti à une face inférieure de la tête, ladite face inférieure étant juxtaposée à la face interne du fond lorsque la tête est en appui sur ladite face interne.

Selon une réalisation du dispositif d'obturation, la bague de verrouillage comporte un contour externe muni d'un joint périphérique. Ce joint périphérique peut participer à l'étanchéité du bouchon en complément du joint d'étanchéité sous la tête ; celui-ci permet essentiellement d'immobiliser convenablement la bague et le bouchon en prenant appui sur une paroi de contour du fond, cette paroi de contour concordant avec l'ouverture sur ledit fond. Cela évite d'éventuelles vibrations du bouchon et de la bague de verrouillage durant la cuisson et préserve ainsi une parfaite étanchéité au niveau du joint d'étanchéité sous la tête du bouchon.

Selon une réalisation du dispositif d'obturation, la tête comprend des premières striures. Cela facilite la préhension de la tête durant le positionnement et le retrait du bouchon. Une variante sans de telles premières striures sur la tête reste toutefois envisageable**.**

Selon une réalisation du dispositif d'obturation, la bague de verrouillage comprend une collerette. Cela facilite la préhension de la bague durant son positionnement autour du corps du bouchon et durant son retrait dudit corps. Une variante sans une telle collerette reste toutefois envisageable.

Selon une réalisation du dispositif d'obturation, la bague de verrouillage peut comprendre un bord supérieur disposé du côté opposé à la collerette et un chanfrein interne au niveau du bord supérieur.

Selon une réalisation du dispositif d'obturation, l'ergot de l'au moins une patte flexible peut présenter une face biseautée du côté de l'extrémité libre de l'au moins une patte flexible.

Selon une réalisation du dispositif d'obturation, l'au moins une patte flexible comprend sur sa face extérieure, au niveau de son extrémité, des secondes striures. Cela facilite le maintien de la patte flexible avec un doigt d'une main durant le dégagement de l'ergot sur ladite patte flexible vis-à-vis de l'épaulement interne sur la bague. Une variante sans de telles secondes striures sur la patte flexible reste toutefois envisageable.

Selon une réalisation du dispositif d'obturation, le bouchon, le joint d'étanchéité et la bague de verrouillage sont conçus dans des matières assurant une résistance à des températures de cuisson de l'ordre de 150°C, correspondant à des préparations culinaires rissolées. L'utilisation d'autres types de matière reste toutefois envisageable.

Selon une réalisation du dispositif d'obturation, le bouchon peut être dépourvu d'axe de transmission longitudinal traversant le corps et la tête.

L'invention concerne également un récipient d'appareil électroménager de préparation culinaire selon la revendication 12.

Le dispositif d'obturation est configuré pour obturer l'ouverture en remplacement de la broche rotative, pour la réalisation de préparations culinaires par traitement thermique uniquement, notamment des préparations culinaires mijotées ou rissolées.

Selon une réalisation du récipient, le fond comprend une pièce de guidage de forme tubulaire définissant l'ouverture, ladite pièce de guidage comprenant un épaulement interne sur lequel prend appui la bague de verrouillage engagée dans ladite pièce de guidage et dépassant du côté inférieur de celle-ci, lors du pincement du fond entre ladite bague de verrouillage et la tête du bouchon. Cette pièce de guidage participe au centrage de la bague de verrouillage et du bouchon lors de la mise en place du dispositif d'obturation.

Selon une réalisation du récipient, le fond comporte une plaque supérieure et une plaque inférieure espacées l'une de l'autre et sur lesquelles est montée la pièce de guidage, la bague de verrouillage et une extrémité de l'au moins une patte flexible étant accessibles en-dessous de la plaque inférieure. D'autres conceptions restent envisageables pour le fond du récipient, notamment avec seulement une plaque.

Selon une réalisation du récipient, la bague de verrouillage est configurée pour prendre appui sur un contour interne de la pièce de guidage lors de la mise en place du dispositif d'obturation sur le fond. Cela permet de centrer convenablement la bague de guidage et le bouchon en évitant d'éventuelles vibrations durant la cuisson.

Selon une réalisation du récipient, celui-ci comprend une semelle munie sur sa face inférieure d'une cavité dans laquelle sont accessibles la bague de verrouillage et une extrémité de l'au moins une patte flexible lorsque le dispositif d'obturation est monté sur le fond du récipient.

Selon une réalisation du récipient, celui-ci comprend un organe de chauffe, ce qui permet la réalisation d'une cuisson. En variante, cet organe de chauffe pourrait être mis en œuvre sur une base de l'appareil électroménager de préparation culinaire. Cet organe de chauffe pourrait alors être notamment configuré pour venir en contact avec le fond du récipient lors de l'engagement de ce récipient sur la base, ou pour chauffer ledit récipient par induction.

L'invention concerne également un appareil électroménager de préparation culinaire selon la revendication 18.

### Brève description des figures

La description suivante met en évidence les caractéristiques et avantages de la présente invention. Cette description s'appuie sur des figures, parmi lesquelles :
La figure 1 illustre une vue d'ensemble d'un appareil électroménager de préparation culinaire sur lequel le dispositif d'obturation selon la présente invention peut être mis en œuvre.
La figure 2 illustre une vue en coupe du récipient sans le dispositif d'obturation et sans broche rotative sur le fond ;
La figure 3 illustre une vue en coupe du récipient avec le dispositif d'obturation mis en place sur le fond ;
La figure 4 illustre un récipient sur lequel est monté le dispositif d'obturation, selon un premier angle de vue ;
La figure 5 illustre le récipient sur lequel est monté le dispositif d'obturation, selon un deuxième angle de vue ;
La figure 6 illustre la bague de verrouillage selon un premier angle de vue ;
La figure 7 illustre la bague de verrouillage selon un second angle de vue, le joint périphérique étant retiré de la bague de verrouillage ;
La figure 8 illustre ledit joint périphérique de la bague de verrouillage ;
La figure 9 illustre le bouchon du dispositif d'obturation selon un premier angle de vue ;
La figure 10 illustre le bouchon du dispositif d'obturation selon un deuxième angle de vue, un capot de la tête étant retirée de celle-ci ;
La figure 11 illustre ledit capot présent sur la tête du bouchon ;
La figure 12 illustre le joint d'étanchéité sur le dispositif d'obturation ;
La figure 13 illustre une vue en coupe du dispositif d'obturation seul.

### Description détaillée

Dans la suite de la description, le terme appareil est utilisé pour désigner un appareil électroménager de préparation culinaire selon l'invention, sans indication contraire.

En outre, les mêmes références sont utilisées pour définir les mêmes caractéristiques sur les diverses pièces.

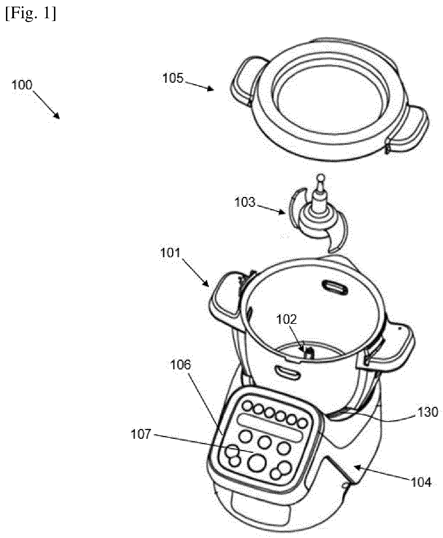

En regard de la figure 1, l'appareil électroménager de préparation culinaire 100 comprend un récipient 101 et une base 104 sur laquelle est engagé le récipient 101. La base 104 comprend une face avant 106 munie d'un clavier de programmation 107. Le récipient 101 comprend une semelle 130. Le récipient 101 comprend une broche rotative 102 qui permet la réception et l'entraînement en rotation d'un outil de traitement culinaire 103. Sur la figure 1, cet outil de traitement culinaire 103 est un outil couteau, mais le récipient 101 peut comporter d'autres outils de traitement culinaire, par exemple un malaxeur. L'appareil électroménager de préparation culinaire 100 comprend un couvercle 105 permettant la fermeture du récipient 101. La base 104 intègre un arbre motorisé (non illustré) qui s'accouple avec la broche rotative 102 lors de l'engagement de la semelle 130 du récipient 101 sur la base 104, pour entraîner en rotation ladite broche rotative 102 afin de réaliser un traitement culinaire au moyen de l'outil de traitement culinaire 103 durant la préparation culinaire.

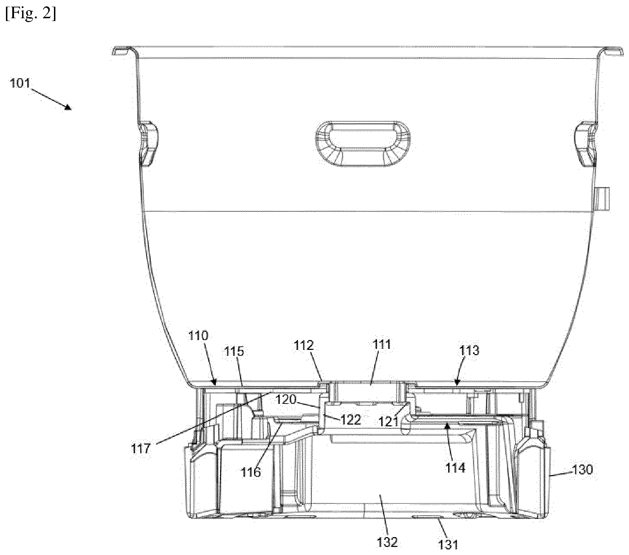

En regard de la figure 2, le récipient 101 comprend un fond 110 qui comporte une plaque supérieure 115, une plaque inférieure 116 et une pièce de guidage 120 qui est tubulaire, ladite pièce de guidage 120 définissant une ouverture 111 sur le fond 110. La plaque supérieure 115 est espacée de la plaque inférieure 116. La pièce de guidage 120 comprend un contour interne 122 délimité par un épaulement interne 121. La semelle 130 du récipient 101 présente une cavité 132 débouchant sur une face inférieure 131 de cette semelle 130. La cavité 132 donne sur une face externe 114 du fond 110, permettant ainsi d'accéder à la pièce de guidage 120 et à l'ouverture 111 par la face externe 114. Le récipient 101 comprend également un organe de chauffe 117 de type résistif qui est placé sous la plaque supérieure 115, de sorte à chauffer le fond 110. La broche rotative 102 se positionne sur le fond 110 au niveau de l'ouverture 111, celle-ci étant fixée grâce à une bague de verrouillage à baïonnette (non illustrée) tel que cela est déjà connu selon les appareils électroménagers de préparation culinaire traditionnels.

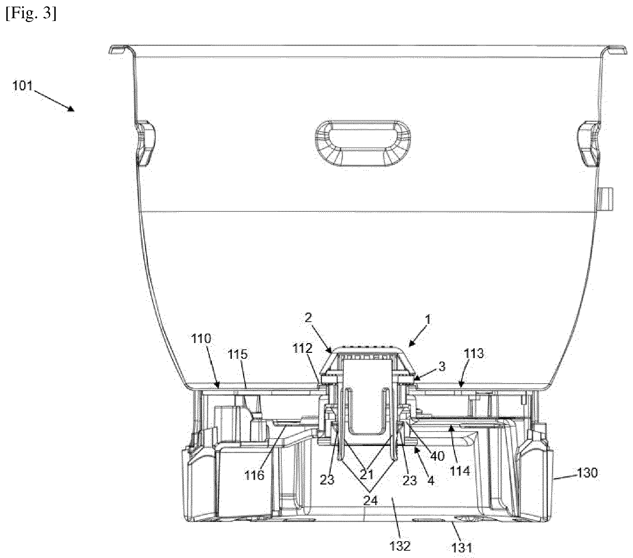

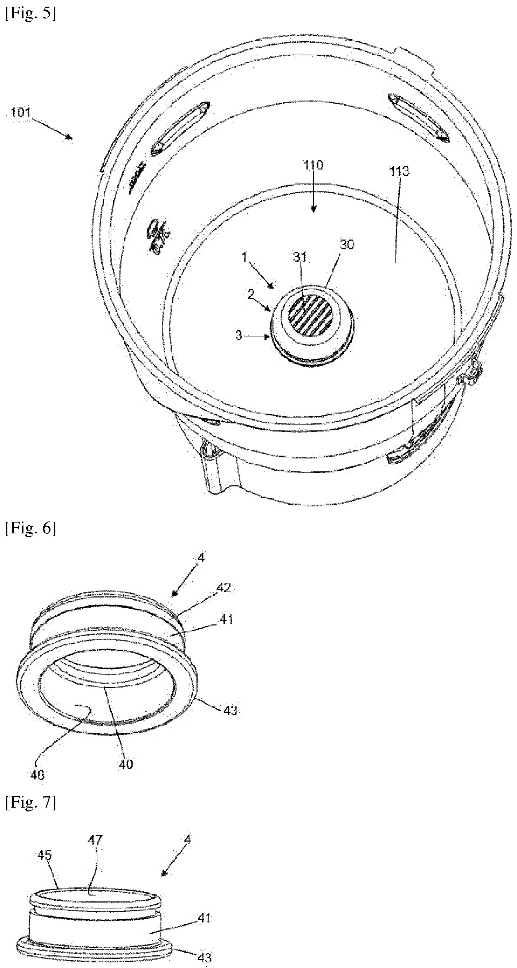

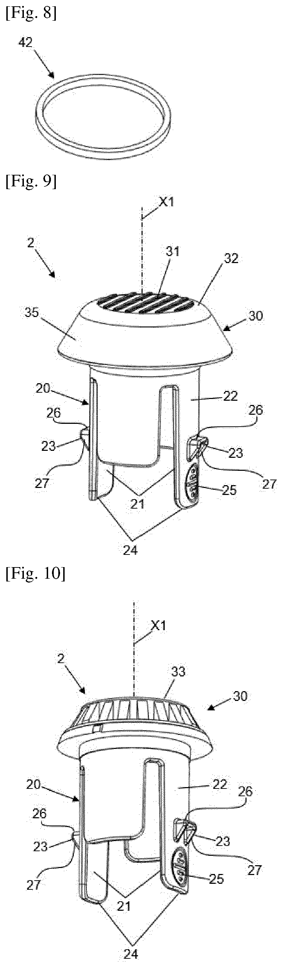

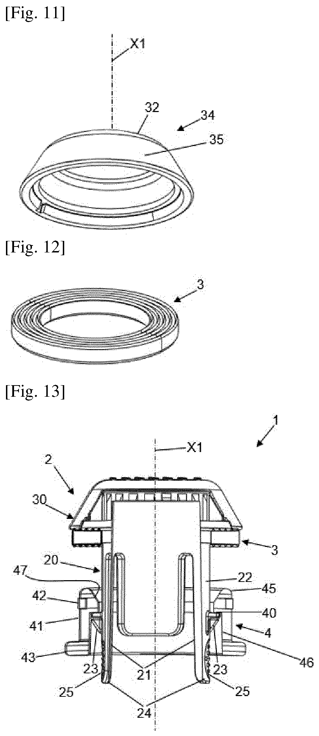

Les figures 3 à 5 montrent qu'un dispositif d'obturation 1 peut être placé sur le fond 110 du récipient 101 en remplacement de la broche rotative 102. Ce dispositif d'obturation 1 est utilisé lors de la réalisation de préparations culinaires mijotées ou rissolées qui ne nécessitent pas l'usage d'un outil de traitement culinaire 103. En d'autres termes, seul un traitement thermique est réalisé. Le dispositif d'obturation 1 comprend un bouchon 2 illustré plus en détail sur les figures 9 à 11, un joint d'étanchéité 3 illustré plus en détail sur les figures 12 et 13 et une bague de verrouillage 4 illustrée plus en détail sur les figures 6 à 8.

En regard des figures 9 à 11, le bouchon 2 comprend un corps 20 ayant une forme générale cylindrique qui s'étend longitudinalement selon un axe X1 et qui présente deux pattes flexibles 21 disposées symétriquement par rapport à l'axe X1 et s'étendant longitudinalement, parallèlement à cet axe X1. Les dimensions du corps 20 permettent son introduction dans l'ouverture 111 sur le fond 110 du récipient 101. Chacune des deux pattes flexibles 21 comprend sur sa face extérieure 22 un ergot 23 qui s'étend radialement par rapport à l'axe X1. Les deux ergots 23 sont disposés en opposition et présentent chacun une face plane 26 sur le côté supérieur de l'ergot 23 et une face biseautée 27. Le bouchon 2 comprend une tête 30 qui prolonge vers le haut le corps 20 et présente des premières striures 31 sur sa face supérieure 32. Cette tête 30 comprend une âme 33 formant une seule et même pièce avec le corps 20 et un capot 34 recouvrant l'âme 33 et comportant lesdites premières striures 31. Des secondes striures 25 sont mises en œuvre sur la face extérieure 22 de la patte flexible 21, à proximité de son extrémité 24.

Tel que bien visible sur les figures 3, 5, 9, 10 et 13, le bouchon 2 est dépourvu d'axe de transmission longitudinal. Ni le corps 20 ni la tête 30 ne sont traversés par un tel axe de transmission longitudinal. L'absence d'un tel axe de transmission permet de réduire les efforts exercés sur le bouchon, par comparaison avec les efforts exercés sur la broche rotative 102 prévue pour recevoir un outil de traitement culinaire 103.

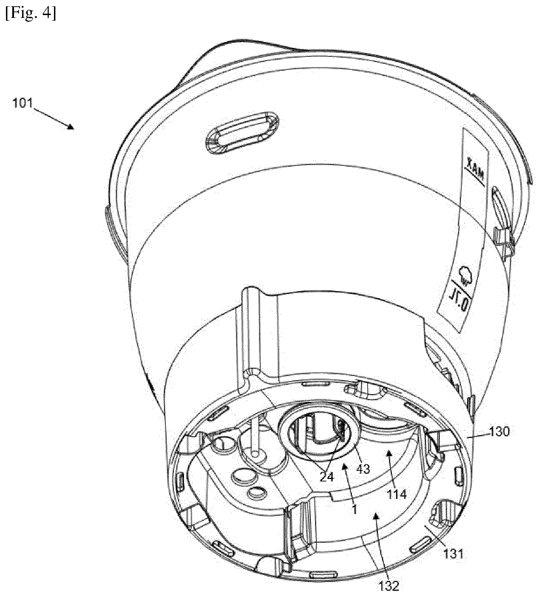

En regard des figures 6 à 8, la bague de verrouillage 4 comprend un contour externe 41 et une collerette 43 à son extrémité inférieure. Le contour externe 41 comprend une gorge 44 qui reçoit un joint périphérique 42. La bague de verrouillage 4 comprend un contour interne 46 délimité par un épaulement interne 40. La bague de verrouillage 4 comprend un bord supérieur 45 disposé du côté opposé à la collerette 43 et un chanfrein interne 47 au niveau de ce bord supérieur 45. En regard des figures 3 à 5, la bague de verrouillage 4 vient se positionner dans le contour interne 122 de la pièce de guidage 120 et le joint périphérique 42 prend appui sur ledit contour interne 122. En outre, le bord supérieur 45 de la bague de verrouillage 4 prend appui sur l'épaulement interne 121 de ladite pièce de guidage 120, tandis que la collerette 43 dépasse de contour interne 122 et reste accessible manuellement dans la cavité 132 depuis la face inférieure 131 de la semelle 130, ce qui apparaît également sur la figure 4.

Tel que bien visible sur les figures 3, 9, 10 et 13, les faces biseautées 27 des ergots 23 sont agencées du côté de l'extrémité libre desdites pattes flexibles 21.

En regard des figures 6,7,9,10 et 13, la bague de verrouillage 4 s'engage autour du corps 20. Durant l'introduction du corps 20 dans la bague de verrouillage 4, les faces biseautées 27 des ergots 23 prennent appui sur le chanfrein interne 47 de la bague de verrouillage 4, ce qui force les pattes flexibles 21 à fléchir en se rapprochant l'une de l'autre et permet aux ergots 23 de passer en-dessous l'épaulement interne 40 et de se placer au niveau du contour interne 46 de ladite bague de verrouillage 4. Dans cette position, les pattes flexibles 21 peuvent revenir dans leur position normale et s'encliqueter sur la bague de verrouillage 4, ce qui permet de placer les ergots 23 en appui contre le contour interne 46, avec leurs faces planes 26 disposées sous l'épaulement interne 40 de ladite bague de verrouillage 4, maintenant ainsi la bague de verrouillage 4 bloquer sur le corps 20 du bouchon 2. Dans cette position bloquée, les parties d'extrémité des pattes flexibles 21 comportant les secondes striures 25 dépassent en-dessous de la collerette 43 de la bague de verrouillage 4. Le retrait de la bague de verrouillage 4 est obtenu en appuyant sur les pattes flexibles 21 au niveau des secondes striures 25, ce qui permet auxdites pattes flexibles 21 de fléchir en se rapprochant jusqu'à ce que les ergots 23 soient dégagés de l'épaulement interne 40, autorisant ainsi le dégagement du corps 20 hors de la bague de verrouillage 4.

En regard des figures 2, 3 et 13, lorsque le dispositif d'obturation 1 est placé sur le fond 110 du récipient 101 et que la bague de verrouillage 4 est bloquée sur le corps 20 du bouchon 2, ledit fond 110 est pincé entre le bord supérieur 45 de la bague de verrouillage 4 qui est en appui sur l'épaulement interne 121 de la pièce de guidage 120 et la tête 30 du bouchon 2, le joint d'étanchéité 3 (figure 12) étant placé entre la tête 30 et une face interne 113 du fond 110, au niveau d'un pourtour 112 de l'ouverture 111. Ainsi, comme le montrent notamment les figures 3 et 5, la tête 30 du bouchon 2 qui est d'un diamètre supérieur à celui de l'ouverture 111, obture étanchement ladite ouverture 111 par l'intermédiaire du joint d'étanchéité 3 qui demeure lui-même pincé entre ladite tête 30 et la face interne 113 du fond 110, grâce à la bague de verrouillage 4 qui est encliquetée avec le corps 20 en-dessous du fond 110 du récipient 101.

Le bouchon 2, le joint d'étanchéité 3 et la bague de verrouillage 4, de même que la pièce de guidage 120 sont conçus dans des matières assurant une résistance à des températures de cuisson de l'ordre de 150°C. Le bouchon 2, la bague de verrouillage 4 et la pièce de guidage 120 sont de préférence en matière plastique et le joint d'étanchéité 3 est de préférence en matière siliconée. Les plaques supérieure 115 et inférieure 116 sont de préférence en acier inoxydable.

Des variantes de réalisation sont envisageables dans le cadre de l'invention, tel que défini par les revendications. Le corps 20 du bouchon 2 pourrait comporter une seule patte flexible 21, voire trois pattes flexibles 21 afin que la ou les pattes flexibles restent facilement manipulables avec une main lors du retrait de la bague de verrouillage 4 vis-à-vis du corps 20 depuis la cavité 132 sous la semelle 130 du récipient 101. L'organe de chauffe 117 pourrait être agencé sur la base 104, au lieu d'être porté par le récipient 101. L'organe de chauffe 117 pourrait par exemple venir alors en contact avec la plaque supérieure 115 du fond 110 lors de l'engagement du récipient 101 sur cette base 104. L'organe de chauffe 117 pourrait aussi être configuré pour chauffer le récipient 101 par induction, le récipient 101 étant alors réalisé au moins partiellement en matériau compatible avec un chauffage par induction, le récipient 101 ou le fond 110 pouvant notamment être réalisés en acier inoxydable ferromagnétique ou comporter au moins un élément réalisé en acier inoxydable ferromagnétique. Les premières striures 31 sur la tête 30 du bouchon 2 pourraient être mises en œuvre sur le contour 35 du capot 34.

## Revendications

1. Dispositif d'obturation (1) d'une ouverture (111) sur un fond (110) de récipient (101) d'appareil électroménager de préparation culinaire (100), le dispositif d'obturation (1) comprenant un bouchon (2) qui comporte un corps (20) de forme allongée agencée pour passer au travers du fond (110) par l'ouverture (111) et une tête (30) prolongeant le corps (20) et agencée pour obturer l'ouverture (111) en prenant appui sur un pourtour (112) de l'ouverture (111) défini sur une face interne (113) dudit fond (110) par l'intermédiaire d'un joint d'étanchéité (3), une fois le corps (20) introduit dans ladite ouverture (111) du côté de ladite face interne (113), ledit dispositif d'obturation (1) comprenant en outre une bague de verrouillage (4) munie d'un épaulement interne (40) et agencée pour recevoir le corps (20), la bague de verrouillage (4) et la tête (30) étant configurées pour pincer le fond (110), **caractérisé en ce que** le corps (20) comprend au moins une patte flexible (21) s'étendant longitudinalement et comportant une face extérieure (22) munie d'un ergot (23), la bague de verrouillage (4) étant agencée pour recevoir le corps (20) et encliqueter l'ergot (23) de l'au moins une patte flexible (21) sur ledit épaulement interne (40) lors de l'engagement de la bague de verrouillage (4) autour dudit corps (20) du côté d'une face externe (114) dudit fond (110), la bague de verrouillage (4) et la tête (30) étant configurées pour pincer le fond (110) lors de l'encliquetage de l'ergot (23) sur l'épaulement interne (40), ladite au moins une patte flexible (21) étant de longueur adaptée pour que ladite au moins une patte flexible (21) dépasse de la bague de verrouillage (4) lorsque la bague de verrouillage (4) est encliquetée avec le corps (20).

2. Dispositif d'obturation (1) selon la revendication 1, dans lequel le corps (20) comprend deux pattes flexibles (21) diamétralement opposées, les ergots (23) sur ces deux pattes flexibles (21) étant disposés en opposition pour venir s'encliqueter sur l'épaulement interne (40) lors de la mise en place de la bague de verrouillage (4) autour du corps (20).

3. Dispositif d'obturation (1) selon l'une quelconque des revendications 1 ou 2, dans lequel le joint d'étanchéité (3) est amovible du bouchon (2) et agencé pour être placé autour du corps (20) sous la tête (30) de sorte à être pincé entre la face interne (113) du fond (110) et la tête (30) une fois le bouchon (2) et la bague de verrouillage (4) mis en place sur le fond (110).

4. Dispositif d'obturation (1) selon l'une quelconque des revendications 1 à 3, dans lequel la bague de verrouillage (4) comporte un contour externe (41) muni d'un joint périphérique (42).

5. Dispositif d'obturation (1) selon l'une quelconque des revendications 1 à 4, dans lequel la tête (30) comprend des premières striures (31).

6. Dispositif d'obturation (1) selon l'une quelconque des revendications 1 à 5, dans lequel la bague de verrouillage (4) comprend une collerette (43).

7. Dispositif d'obturation (1) selon la revendication 6, dans lequel la bague de verrouillage (4) comprend un bord supérieur (45) disposé du côté opposé à la collerette (43) et un chanfrein interne (47) au niveau du bord supérieur (45).

8. Dispositif d'obturation (1) selon l'une quelconque des revendications 1 à 7, dans lequel l'ergot (23) de l'au moins une patte flexible (21) présente une face biseautée (27) du côté de l'extrémité libre de l'au moins une patte flexible (21).

9. Dispositif d'obturation (1) selon l'une quelconque des revendications 1 à 8, dans lequel l'au moins une patte flexible (21) comprend sur sa face extérieure (22), au niveau de son extrémité (24), des secondes striures (25).

10. Dispositif d'obturation (1) selon l'une quelconque des revendications 1 à 9, dans lequel le bouchon (2), le joint d'étanchéité (3) et la bague de verrouillage (4) sont conçus dans des matières assurant une résistance à des températures de cuisson de l'ordre de 150°C.

11. Dispositif d'obturation (1) selon l'une quelconque des revendications 1 à 10, dans lequel le bouchon (2) est dépourvu d'axe de transmission longitudinal traversant le corps (20) et la tête (30).

12. Récipient (101) d'appareil électroménager de préparation culinaire (100), comprenant un fond (110) muni d'une ouverture (111), une broche rotative (102) de réception d'au moins un outil de traitement culinaire (103), ladite broche rotative (102) étant configurée pour être montée sur le fond (110) en obturant ladite ouverture (111), et un dispositif d'obturation (1) selon l'une quelconque des revendications 1 à 11, le dispositif d'obturation (1) étant configuré pour obturer l'ouverture (111) en remplacement de la broche rotative (102), pour la réalisation de préparations culinaires par traitement thermique uniquement.

13. Récipient (101) selon la revendication 12, dans lequel le fond (110) comprend une pièce de guidage (120) de forme tubulaire définissant l'ouverture (111), ladite pièce de guidage (120) comprenant un épaulement interne (121) sur lequel prend appui la bague de verrouillage (4) engagée dans ladite pièce de guidage (120) et dépassant du côté inférieur de celle-ci, lors du pincement du fond (110) entre ladite bague de verrouillage (4) et la tête (30) du bouchon (2).

14. Récipient (101) selon la revendication 13, dans lequel le fond (110) comporte une plaque supérieure (115) et une plaque inférieure (116) espacées l'une de l'autre et sur lesquelles est montée la pièce de guidage (120), la bague de verrouillage (4) et une extrémité (24) de l'au moins une patte flexible (21) étant accessibles en-dessous de la plaque inférieure (116).

15. Récipient (101) selon l'une quelconque des revendications 13 ou 14, dans lequel la bague de verrouillage (4) est configurée pour prendre appui sur un contour interne (122) de la pièce de guidage (120) lors de la mise en place du dispositif d'obturation (1) sur le fond (110).

16. Récipient (101) selon l'une quelconque des revendications 12 à 15, lequel comprend une semelle (130) munie sur sa face inférieure (131) d'une cavité (132) dans laquelle sont accessibles la bague de verrouillage (4) et une extrémité (24) de l'au moins une patte flexible (21) lorsque le dispositif d'obturation (1) est monté sur le fond (110) du récipient (101).

17. Récipient (101) selon l'une quelconque des revendications 12 à 16, lequel comprend un organe de chauffe (117).

18. Appareil électroménager de préparation culinaire (100) comprenant un récipient (101) présentant les caractéristiques de l'une quelconque des revendications 12 à 17 et une base (104) configurée pour recevoir le récipient (101) durant la réalisation d'une préparation culinaire.

## Patentansprüche

1. Verschlussvorrichtung (1) für eine Öffnung (111) auf einem Boden (110) eines Behälters (101) eines Elektrohaushaltsgeräts zur Nahrungszubereitung (100), wobei die Verschlussvorrichtung (1) einen Stopfen (2) umfasst, der einen länglichen Körper (20), der zum Hindurchgehen durch den Boden (110) durch die Öffnung (111) angeordnet ist, und einen Kopf (30) aufweist, der den Körper (20) verlängert und zum Verschließen der Öffnung (111) angeordnet ist, durch Auflage auf einem Umfang (112) der Öffnung (111), der auf einer Innenseite (113) des Bodens (110) mittels einer Dichtung (3) definiert ist, sobald der Körper (20) auf der Seite der Innenseite (113) in die Öffnung (111) eingeführt ist, wobei die Verschlussvorrichtung (1) weiter einen Verriegelungsring (4) umfasst, der mit einer inneren Schulter (40) versehen und zur Aufnahme des Körpers (20) angeordnet ist, wobei der Verriegelungsring (4) und der Kopf (30) zum Einklemmen des Bodens (110) konfiguriert sind, **dadurch gekennzeichnet, dass** der Körper (20) mindestens eine sich länglich erstreckende flexible Lasche (21) umfasst und eine mit einer Nase (23) versehene Außenseite (22) aufweist, wobei der Verriegelungsring (4) zur Aufnahme des Körpers (20) und zum Einrasten der Nase (23) der mindestens einen flexiblen Lasche (21) an der inneren Schulter (40) während des Eingriff des Verriegelungsrings (4) um den Körper (20) auf der Seite einer Außenseite (114) des Bodens (110) angeordnet ist, wobei der Verriegelungsring (4) und der Kopf (30) zum Einklemmen des Bodens (110) während des Einrastens der Nase (23) auf die innere Schulter (40) konfiguriert sind, wobei die mindestens eine flexible Lasche (21) in ihrer Länge so angepasst ist, dass die mindestens eine flexible Lasche (21) aus dem Verriegelungsring (4) herausragt, wenn der Verriegelungsring (4) mit dem Körper (20) eingerastet ist.

2. Verschlussvorrichtung (1) nach Anspruch 1, wobei der Körper (20) zwei diametral gegenüberliegende flexible Laschen (21) umfasst, wobei die Nasen (23) auf diesen zwei flexiblen Laschen (21) gegenüberliegend angeordnet sind, um beim Positionieren des Verriegelungsrings (4) um den Körper (20) auf die innere Schulter (40) einzurasten.

3. Verschlussvorrichtung (1) nach einem der Ansprüche 1 oder 2, wobei die Dichtung (3) vom Stopfen (2) abnehmbar und angeordnet ist, um den Körper (20) unter dem Kopf (30) herum so platziert zu werden, dass sie zwischen der Innenseite (113) des Bodens (110) und dem Kopf (30) eingeklemmt wird, sobald der Stopfen (2) und der Verriegelungsring (4) auf dem Boden (110) positioniert sind.

4. Verschlussvorrichtung (1) nach einem der Ansprüche 1 bis 3, wobei der Verriegelungsring (4) eine mit einer Umfangsdichtung (42) versehene Außenkontur (41) aufweist.

5. Verschlussvorrichtung (1) nach einem der Ansprüche 1 bis 4, wobei der Kopf (30) erste Riffelungen (31) umfasst.

6. Verschlussvorrichtung (1) nach einem der Ansprüche 1 bis 5, wobei der Verriegelungsring (4) einen Flansch (43) umfasst.

7. Verschlussvorrichtung (1) nach Anspruch 6, wobei der Verriegelungsring (4) einen oberen Rand (45) umfasst, der auf der dem Flansch (43) gegenüberliegenden Seite angeordnet ist, und eine Innenfase (47) im Bereich des oberen Randes (45).

8. Verschlussvorrichtung (1) nach einem der Ansprüche 1 bis 7, wobei die Nase (23) der mindestens einen flexiblen Lasche (21) eine abgeschrägte Seite (27) auf der Seite des freien Endes der mindestens einen flexiblen Lasche (21) aufweist.

9. Verschlussvorrichtung (1) nach einem der Ansprüche 1 bis 8, wobei die mindestens eine flexible Lasche (21) auf ihrer Außenseite (22) im Bereich ihres Endes (24) zweite Riffelungen (25) umfasst.

10. Verschlussvorrichtung (1) nach einem der Ansprüche 1 bis 9, wobei der Stopfen (2), die Dichtung (3) und der Verriegelungsring (4) aus Materialien bestehen, die eine Beständigkeit gegen Gartemperaturen im Bereich von 150 °C gewährleisten.

11. Verschlussvorrichtung (1) nach einem der Ansprüche 1 bis 10, wobei der Stopfen (2) frei von einer den Körper (20) und den Kopf (30) durchquerenden Antriebslängsachse ist.

12. Behälter (101) eines Elektrohaushaltsgeräts zur Nahrungszubereitung (100), umfassend einen mit einer Öffnung (111) versehenen Boden (110), eine Drehspindel (102) zur Aufnahme mindestens eines Nahrungsmittelbehandlungswerkzeugs (103), wobei die Drehspindel (102) dazu konfiguriert ist, unter Verschluss der Öffnung (111) auf dem Boden (110) montiert zu werden, und eine Verschlussvorrichtung (1) nach einem der Ansprüche 1 bis 11, wobei die Verschlussvorrichtung (1) dazu konfiguriert ist, die Öffnung (111) anstelle der Drehspindel (102) zu verschließen, um die Nahrungszubereitung ausschließlich durch Wärmebehandlung durchzuführen.

13. Behälter (101) nach Anspruch 12, wobei der Boden (110) ein rohrförmiges Führungsstück (120) umfasst, das die Öffnung (111) definiert, wobei das Führungsstück (120) eine innere Schulter (121) umfasst, auf der der Verriegelungsring (4) aufliegt, der in das Führungsstück (120) eingreift und beim Einklemmen des Bodens (110) zwischen dem Verriegelungsring (4) und dem Kopf (30) des Stopfens (2) an dessen Unterseite herausragt.

14. Behälter (101) nach Anspruch 13, wobei der Boden (110) eine obere Platte (115) und eine untere Platte (116) aufweist, die voneinander beabstandet sind und auf denen das Führungsstück (120) montiert ist, wobei der Verriegelungsring (4) und ein Ende (24) der mindestens einen flexiblen Lasche (21) unterhalb der unteren Platte (116) zugänglich sind.

15. Behälter (101) nach einem der Ansprüche 13 oder 14, wobei der Verriegelungsring (4) dazu konfiguriert ist, beim Positionieren der Verschlussvorrichtung (1) auf den Boden (110) auf einer Innenkontur (122) des Führungsstücks (120) aufzuliegen.

16. Behälter (101) nach einem der Ansprüche 12 bis 15, der eine Sohle (130) umfasst, die an ihrer Unterseite (131) mit einem Hohlraum (132) versehen ist, in den der Verriegelungsring (4) und ein Ende (24) der mindestens einen flexiblen Lasche (21) zugänglich sind, wenn die Verschlussvorrichtung (1) auf dem Boden (110) des Behälters (101) montiert ist.

17. Behälter (101) nach einem der Ansprüche 12 bis 16, der ein Heizelement (117) umfasst.

18. Elektrohaushaltsgerät zur Nahrungszubereitung (100), umfassend einen Behälter (101), der die Merkmale nach einem der Ansprüche 12 bis 17 aufweist, und eine Basis (104), die zur Aufnahme des Behälters (101) während der Ausführung einer Nahrungszubereitung konfiguriert ist.

## Claims

1. Device (1) for plugging an opening (111) in a bottom (110) of a container (101) of a household appliance for food preparation (100), the plugging device (1) comprising a cap (2) that has a body (20) of elongate shape, arranged to pass through the bottom (110) through the opening (111), and a head (30) extending the body (20) and arranged to plug the opening (111) by bearing on a perimeter (112) of the opening (111) defined on an internal face (113) of said bottom (110) via a seal (3), once the body (20) is introduced into said opening (111), on the side of said internal face (113), said plugging device (1) further comprising a locking ring (4) that is provided with an internal shoulder (40) and arranged to receive the body (20), the locking ring (4) and the head (30) being configured to grasp the bottom (110), **characterised in that** the body (20) comprises at least one flexible tab (21) extending longitudinally and comprising an outer face (22) provided with a lug (23), the locking ring (4) being arranged to receive the body (20) and snap-fasten the lug (23) of the at least one flexible tab (21) onto said internal shoulder (40) when the locking ring (4) engages around said body (20) on the side of an external face (114) of said bottom (110), the locking ring (4) and the head being configured to grasp the bottom (110) when the lug (23) is snap-fastened onto the internal shoulder (40), said at least one flexible tab (21) being of a suitable length, such that at least one flexible tab (21) protrudes beyond the locking ring (4), when the locking ring (4) is snap-fastened onto the body (20).

2. Plugging device (1) according to claim 1, wherein the body (20) comprises two diametrically opposite flexible tabs (21), the lugs (23) on these two flexible tabs (21) being disposed opposite one another to be snap-fastened onto the internal shoulder (40) during the placing of the locking ring (4) around the body (20).

3. Plugging device (1) according to any one of claims 1 or 2, wherein the seal (3) is removable from the cap (2) and arranged to be placed around the body (20) under the head (30), so as to be grasped between the internal face (113) of the bottom (110) and the head (30) once the cap (2) and the locking ring (4) are placed on the bottom (110).

4. Plugging device (1) according to any one of claims 1 to 3, wherein the locking ring (4) comprises an external contour (41) provided with a peripheral seal (42).

5. Plugging device (1) according to any one of claims 1 to 4, wherein the head (30) comprises first corrugations (31).

6. Plugging device (1) according to any one of claims 1 to 5, wherein the locking ring (4) comprises a collar (43).

7. Plugging device (1) according to claim 6, wherein the locking ring (4) comprises an upper edge (45) disposed on the side opposite the collar (43) and an internal bevel (47) at the upper edge (45).

8. Plugging device (1) according to any one of claims 1 to 7, wherein the lug (23) of the at least one flexible tab (21) has a beveled face (27) on the side of the free end of the at least one flexible tab (21).

9. Plugging device (1) according to any one of claims 1 to 8, wherein the at least one flexible tab (21) comprises second corrugations (25) on its outer face (22), at its end (24).

10. Plugging device (1) according to any one of claims 1 to 9, wherein the cap (2), the seal (3) and the locking ring (4) are designed from materials ensuring a resistance to cooking temperatures of around 150°C.

11. Plugging device (1) according to any one of claims 1 to 10, wherein the cap (2) has no longitudinal transmission shaft passing through the body (20) and the head (30).

12. Container (101) of a household appliance for food preparation (100), comprising a bottom (110) provided with an opening (111), a rotating spindle (102) for receiving at least one cooking treatment tool (103), said rotating spindle (102) being configured to be mounted on the bottom (110) by plugging said opening (111), and a plugging device (1) according to any one of claims 1 to 11, the plugging device (1) being configured to plug the opening (111), replacing the rotating spindle (102), to prepare food by heat treatment only.

13. Container (101) according to claim 12, wherein the bottom (110) comprises a tubular-shaped guiding part (120) defining the opening (111), said guiding part (120) comprising an internal shoulder (121) on which the locking ring (4) bears, engaged in said guiding part (120) and protruding beyond the lower side of it, during the grasping of the bottom (110) between said locking ring (4) and the head (30) of the cap (2).

14. Container (101) according to claim 13, wherein the bottom (110) comprises an upper plate (115) and a lower place (116) spaced apart from one another, and on which the guiding part (120) is mounted, the locking ring (4) and an end (24) of the at least one flexible tab (21) being accessible below the lower plate (116).

15. Container (101) according to any one of claims 13 or 14, wherein the locking ring (4) is configured to bear on an internal contour (122) of the guiding part (120) during the placing of the plugging device (1) on the bottom (110).

16. Container (101) according to any one of claims 12 to 15, which comprises a baseplate (130) provided on its lower face (131) of a cavity (132), in which the locking ring (4) and an end (24) of the at least one flexible tab (21) are accessible, when the plugging device (1) is mounted on the bottom (110) of the container (101).

17. Container (101) according to any one of claims 12 to 16, which comprises a heating member (117).

18. Household appliance for food preparation (100) comprising a container (101) having the features of any one of claims 12 to 17, and a base (104) configured to receive the container (101) during food preparation.
